# EUROPEAN PATENT APPLICATION

(11) **EP 4 586 506 A1**
(43) Date of publication of application: **16.07.2025**
(21) Application number: 25150321.5
(22) Date of filing: 06.01.2025
(51) Int. Cl.: H04B 1/401, H04B 15/04, H04W 16/16, H04W 88/06, H04W 88/10, H04B 1/04

(54) **SYSTEMS AND METHODS TO REDUCE INTERFERENCE BETWEEN A WI-FI TRANSCEIVER AND COEXISTING WIRELESS COMMUNICATIONS**

(30) Priority: 10.01.2024 US 202418409517
(71) Applicant: Vtech Telecommunications Limited, New Territories Hong Kong (HK)
(72) Inventor: WONG, Argus Chi Wai, Tai Po New Territories, Hong Kong (HK); KOO, Benny Chun Hong, Tai Po New Territories, Hong Kong (HK)
(74) Representative: D Young & Co LLP

(57) **Abstract**

Reducing interference between communications performed by a Wi-Fi transceiver and coexisting wireless communications performed by a second transceiver in a dual wireless communication system. A method includes receiving, by a controller of the second transceiver, a Wi-Fi state signal from the Wi-Fi transceiver. The Wi-Fi state signal indicates timing of a transmit mode and a receive mode of the Wi-Fi transceiver. The method further includes outputting, by the controller of the second transceiver, a control signal for a radio-frequency (RF) component to cause switching between a first mode of the RF component, corresponding to a normal transmit mode, and a second mode of the RF component, corresponding to a receive mode or a low power mode, based at least in part on the Wi-Fi state signal, and a transmit or receive mode status of the second transceiver to reduce interference with the receive mode of the Wi-Fi transceiver.

## Description

### BACKGROUND

### Technical Field

The present disclosure generally relates to reducing interference between a Wi-Fi transceiver and coexisting wireless communications.

### Description of the Related Art

Home communication and security devices, such as baby monitors, may use Wi-Fi to communicate to a network. Other types of communication modes may be in use within the same device, or a nearby device, which may interfere with the Wi-Fi signal. In such a case, the Wi-Fi receiving performance may be degraded when a co-located transceiver transmits data at the same time. The Wi-Fi throughput may be dropped and/or the interference may cause shorter Wi-Fi coverage.

This disclosure describes a method of reducing the FHSS transmit power as Wi-Fi receiving data. It can greatly reduce the interference from proprietary wireless communication device to Wi-Fi in baby unit and improve the Wi-Fi uplink throughput.

A Wi-Fi transceiver will retry sending a Request-to-Send (RTS) signal if it does not receive Clear-to-Send (CTS) signal due to interference. This reduces throughput, especially if there are multiple RTS retries. The Wi-Fi transceiver starts to transmit a data packet after receiving the CTS signal. At the end of data transmission, the Wi-Fi transceiver waits to receive an acknowledgement (ACK) signal. The Wi-Fi transceiver will retransmit the data packet if it does not receive an ACK signal due to interference. This reduces throughput, especially if there are multiple Wi-Fi data retransmissions.

Some devices attempt to reduce interference by using a different frequency channel for Wi-Fi than for coexisting wireless communication devices or by reducing the duty cycle of transmission in the coexisting wireless communication devices. However, such approaches involve tradeoffs relating to the availability of frequency channels and data transmission inefficiencies.

### SUMMARY

Particular aspects are set out in the appended independent claims. Various optional embodiments are set out in the dependent claims. In disclosed embodiments, a dual-mode communication system, e.g., a baby monitor, has both Wi-Fi communications and coexisting (e.g., proprietary) wireless communications in a single device/unit. For example, a baby monitor unit may connect to a router by Wi-Fi, but may connect to a "parent" unit using a proprietary wireless communication system, such as frequency hopping spread spectrum (e.g. FHSS). In such a case, the proprietary wireless communication system/sub-system may interfere with the Wi-Fi communication system/sub-system as they operate simultaneously. Specifically, the Wi-Fi receiving performance may be degraded as the FHSS transceiver transmits data at the same time. The Wi-Fi throughput may be dropped, which may result in shorter distance Wi-Fi coverage.

In disclosed embodiments, on the other hand, there is a method of reducing the transmit power of the coexisting system, e.g., the FHSS system, as the Wi-Fi system receives data. Such an approach can significantly reduce interference from a coexisting wireless communication device (e.g., a proprietary communications device) with a Wi-Fi communication system, e.g., in a baby monitor unit, thereby improving the Wi-Fi communication system uplink throughput.

Disclosed embodiments rely on the specific timing of Wi-Fi receiving to reduce the interference in receiving Clear-to-Send (CTS) and Acknowledgement (ACK) signals. Thus, the Wi-Fi uplink throughput can be greatly improved. Specifically, this involves disabling an RF switch (or setting an adjustable gain amplifier to a low gain setting) or otherwise reducing transmit power in the coexisting wireless communication device as Wi-Fi device receives CTS or ACK signals. In embodiments, the coexisting wireless communication device reduces transmit power once the Wi-Fi communication system has finished a transmission cycle. In this approach, the coexisting wireless communication device reduces the transmit power during a determined time period to reduce interference as the Wi-Fi system is receiving. The coexisting wireless communication device may transmit with maximum transmit power as the Wi-Fi system transmits data. By virtue of this arrangement, a coexisting FHSS system can realize a duty cycle of about 50%, whereas in other approaches, only less than about 40% of the duty cycle can be realized.

Disclosed embodiments provide a system including a Wi-Fi transceiver having a Wi-Fi state signal output which indicates the state of the Wi-Fi transceiver to a second radio module controller. The second radio module controller obtains the timing of the transmit mode and the receive mode of Wi-Fi transceiver from the Wi-Fi state signal.

The system further includes a second radio module, including an RF component (e.g., an RF switch or adjustable gain amplifier) and a second radio transceiver. The RF component includes RF ports for connecting the second radio transceiver to an antenna and control ports for connecting a second radio module controller.

The system further includes a second radio module controller including a Wi-Fi state input and an interface to control the second radio module. The controller activates the RF component transmit or receive mode in regular transmit and receive slots of the second radio system. The second radio module controller reduces the transmit power of second transceiver module for a determined period of time once the Wi-Fi transceiver changes state from transmit mode to receive mode. The second radio module controller may do this by forcing the RF component to receive mode or low power transmit mode, even if it is operating in normal transmit mode during the second radio transmit slot. In embodiments, the determined amount of time is greater than the length of CTS and ACK. The amount of time may be predetermined by the second radio module controller. The second radio module controller may turn off the RF component normal transmit mode and activate the low power transmit mode within SIFS after the Wi-Fi transceiver changes state from transmit mode to receive mode.

The second radio transceiver may operate in the same frequency channel as the Wi-Fi transceiver. The Wi-Fi transceiver and the second radio system are permitted to transmit a signal at the same time but the second radio transmit signal level is reduced as the Wi-Fi transceiver is receiving ACK or CTS. The RF component transmit mode controlling may be related to Wi-Fi state.

In one aspect, the disclosed embodiments are directed to a method and computer-readable media to reduce interference between communications performed by a Wi-Fi transceiver and coexisting wireless communications performed by a second transceiver in a dual wireless communication system. The method includes receiving, by a controller of the second transceiver, a Wi-Fi state signal from the Wi-Fi transceiver. The Wi-Fi state signal indicates timing of a transmit mode and a receive mode of the Wi-Fi transceiver. The method further includes outputting, by the controller of the second transceiver, a control signal for a switch or adjustable gain amplifier radio-frequency (RF) component to cause switching between a first mode of the RF component, corresponding to a transmit mode, and a second mode of the RF component, corresponding to a receive mode or a low power transmit mode, based at least in part on the Wi-Fi state signal and a transmit or receive mode status of the second transceiver to reduce interference with the receive mode of the Wi-Fi transceiver.

Embodiments may include one or more of the following features, individually or in combination.

The RF component may include an RF switch configured to pass RF signals substantially in an output direction in the first mode and substantially in an input direction in the second mode. The RF component may include an adjustable gain amplifier configured to pass RF signals in an output direction with a substantially higher gain in the first mode and with a substantially lower gain in the second mode.

The method may further include generating a second transceiver mode signal to control timing of the transmit mode and the receive mode of the second transceiver. In the outputting, the control signal for the RF component may be output with a timing based at least in part on the Wi-Fi state signal and the second transceiver mode signal. The controller of the second transceiver may output the control signal with a timing to cause the RF component to: maintain the first mode of the RF component when the second transceiver mode signal indicates the transmit mode of the second transceiver and the Wi-Fi state signal indicates the transmit mode of the Wi-Fi transceiver; and maintain the second mode of the RF component when the second transceiver mode signal indicates the receive mode of the second transceiver. The controller of the second transceiver may output the control signal for the RF component with a timing to switch temporarily from the first mode of the RF component to the second mode for a defined time period when the Wi-Fi state signal indicates a transition from the transmit mode to the receive mode of the Wi-Fi transceiver. The defined time period may be greater than a length of Clear to Send (CTS) signals and greater than a length of Acknowledge (ACK) signals received by the Wi-Fi transceiver.

In the outputting, the controller of the second transceiver may output the control signal for the RF component with a timing to permit the Wi-Fi transceiver and the second transceiver to transmit at the same time but not permit the second transceiver to transmit at full power when the Wi-Fi transceiver is waiting to receive, ACK or CTS signals. The control signal for the RF component may be output with a timing to cause switching from the first mode to the second mode of the RF component in a time period shorter than the Short Inter-frame Space (SIFS) of the Wi-Fi transceiver. The Wi-Fi transceiver and the second transceiver may have operational frequencies that at least partially overlap.

In another aspect, the disclosed embodiments are directed to a dual wireless communication system configured to reduce interference between communications performed by a Wi-Fi transceiver and coexisting wireless communications performed by a second transceiver. The system includes a Wi-Fi transceiver; a second transceiver having a controller. The controller of the second transceiver is configured to: receive a Wi-Fi state signal from the Wi-Fi transceiver, the Wi-Fi state signal indicating timing of a transmit mode and a receive mode of the Wi-Fi transceiver; and output a control signal for a switch or adjustable gain amplifier radio-frequency (RF) component to cause switching between a first mode of the RF component, corresponding to a transmit mode, and a second mode of the RF component, corresponding to a receive mode or a low power transmit mode, based at least in part on the Wi-Fi state signal and a current transmit or receive mode of the second transceiver to reduce interference with the receive mode of the Wi-Fi transceiver.

Embodiments may include one or more of the following features (as well as features of the method and computer-readable media discussed above) individually or in combination.

The second transceiver may be connected to an antenna via the RF component. The second transceiver may be a Time Division Multiple Access (TDMA) transceiver. The Wi-Fi transceiver and the second transceiver may have operational frequencies that at least partially overlap. The RF component may include an RF switch configured to pass RF signals substantially in an output direction in the first mode and substantially in an input direction in the second mode. The RF component may include an adjustable gain amplifier configured to pass RF signals in an output direction with a substantially higher gain in the first mode and with a substantially lower gain in the second mode. The Wi-Fi transceiver and the second transceiver may have operational frequencies that at least partially overlap.

### BRIEF DESCRIPTION OF THE DRAWINGS

Figure 1 depicts a dual wireless communication system 100 configured to reduce interference between Wi-Fi communications and coexisting wireless communications.
Figure 2 depicts timing diagrams of Wi-Fi data transmission. In particular, the first diagram depicts a Wi-Fi transmit data signal shows the timing of a Request-to-Send (RTS) signal and a data packet.
Figure 3 depicts timing diagrams of a frame structure of the second transceiver and corresponding RF component control signals.
Figure 4 depicts a flowchart of the control loop for switching of the RF component based on the Wi-Fi state signal and the current mode of the second transceiver to reduce interference in the Wi-Fi transceiver.
Figure 5 depicts a flowchart of a method to reduce interference between communications performed by a Wi-Fi transceiver and coexisting wireless communications performed by a second transceiver in a dual wireless communication system.

Where considered appropriate, reference numerals may be repeated among the drawings to indicate corresponding or analogous elements. Moreover, some of the blocks depicted in the drawings may be combined into a single function.

### DETAILED DESCRIPTION

Reference will now be made in detail to the embodiments of the disclosure, examples of which are illustrated in the accompanying drawings. While the disclosure will be described in conjunction with these embodiments, it will be understood that they are not intended to limit the disclosure to these embodiments. On the contrary, the disclosure is intended to cover alternatives, modifications, and equivalents that may be included within the scope of the disclosure as defined by the appended claims. Furthermore, in the following detailed description, numerous specific details are set forth in order to provide a thorough understanding of the present disclosure. However, it will be understood by those of ordinary skill in the art that the present disclosure may be practiced without these specific details. In other instances, well-known methods, procedures, components, and circuits have not been described in detail so as not to unnecessarily obscure aspects of the present disclosure.

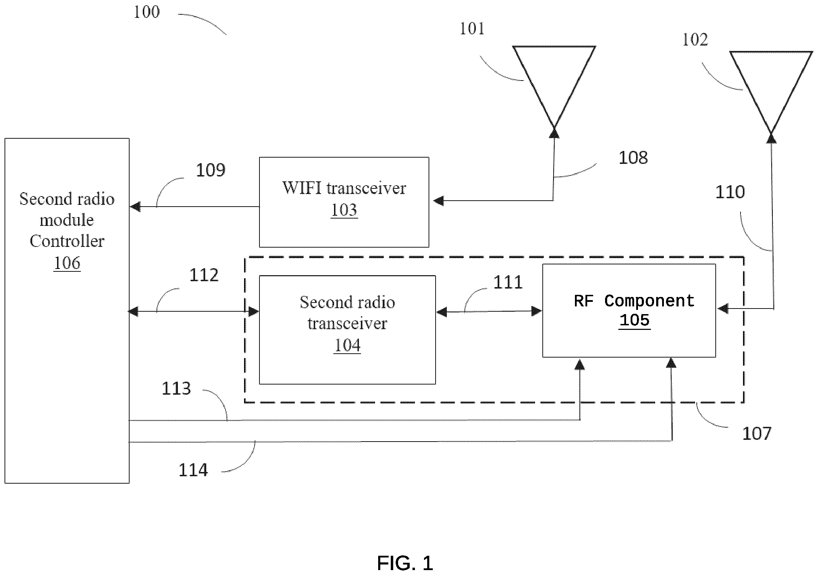

Figure 1 depicts a dual wireless communication system 100 configured to reduce interference between Wi-Fi communications and coexisting wireless communications. The system includes a Wi-Fi transceiver 103 which outputs and receives, respectively, a transmit signal and a receive signal (both designated as 108) to communicate with a wireless local area network (LAN) via an antenna 101. The system 100 further includes a second transceiver subsystem or module 107 comprising a second transceiver 104 and a switch or adjustable gain amplifier radio-frequency (RF) component 105. The RF component 105 may be implemented by various other RF devices capable of selectively substantially reducing the output of the second transceiver 104 in a sufficiently short time (as discussed in further detail below), such as variable attenuators, phase shifter circuits, etc. A transmit and a receive signal (both designated as 111) of the second transceiver 104 pass through the RF component 105 to an antenna 110. The Wi-Fi transceiver and the second transceiver have operational frequencies that at least partially overlap. In embodiments, the second transceiver 104 may be, for example, a Time Division Multiple Access (TDMA) transceiver.

The system 100 further includes a controller 106 (also referred to as a "second radio module controller"), which has an interface 112 to control the second transceiver 104. The controller 106 is configured to receive a Wi-Fi state signal 109 indicating the timing of a transmit mode and a receive mode of the Wi-Fi transceiver 103. The controller 106 is further configured to output a control signal for the RF component 105 to cause switching between a first mode, corresponding to a normal transmit mode, and a second mode, corresponding to a receive mode or a low power transmit mode. In embodiments in which an RF adjustable gain amplifier is used as the RF component, the phrase "normal transmit mode" refers to transmission at normal operational signal levels, as opposed to the "low power transmit mode." In such a case, the first and second modes may be implemented as a higher gain setting of the amplifier and a lower gain setting, respectively, wherein the higher and lower gain settings may be determined by operational and practical considerations and/or the specifications of the amplifier (e.g., the highest and lowest gain settings of the amplifier, respectively). For example, the lower gain setting may between about 3 dB and about 20 dB lower than the higher gain setting or, in particular embodiments, between about 3 dB and about 10 dB lower or, in particular embodiments, between about 6 dB and about 10 dB lower. In embodiments, the second radio module controller 106 has a signal 113 for controlling a first mode timing in the RF component 105 and another signal 114 for controlling a second mode timing in the RF component 105.

In general, the RF component 105 (referred to as "RF switch" in the figure) is changed to the first mode (e.g., normal transmit mode) as the second transceiver 104 operates in transmit mode, and the RF component 105 is changed to the second mode (e.g., receive mode or low power transmit mode) as the second transceiver 104 operates in receive mode. However, in accordance with disclosed embodiments, the switching of the RF component 105 is performed in a particular manner to reduce interference arising from the second transceiver 104 transmitting during the receive mode of the Wi-Fi transceiver 103. As discussed in further detail below, the switching of the RF component 105 is based on the Wi-Fi state signal 109 and the current mode status - transmit or receive - of the second transceiver 104 to reduce such interference.

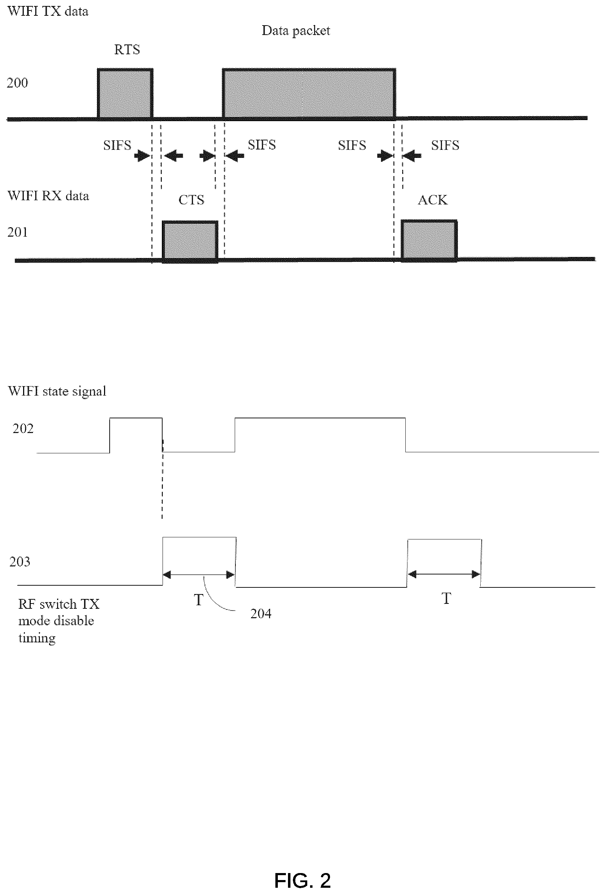

Figure 2 depicts timing diagrams of Wi-Fi data transmission. In particular, the first diagram depicts a Wi-Fi transmit data signal 200 shows the timing of a Request to Send (RTS) signal and a data packet. The second diagram 201 depicts a Wi-Fi receive data signal 201 showing the timing of a Clear to Send (CTS) signal and an Acknowledgment (ACK) signal. The third diagram shows the timing of a Wi-Fi state signal 202 (see Fig. 1, 109) indicating the timing of a transmit mode and a receive mode of the Wi-Fi transceiver, which aligns with the timing of the RTS signal and the data packet represented in the first diagram 200.

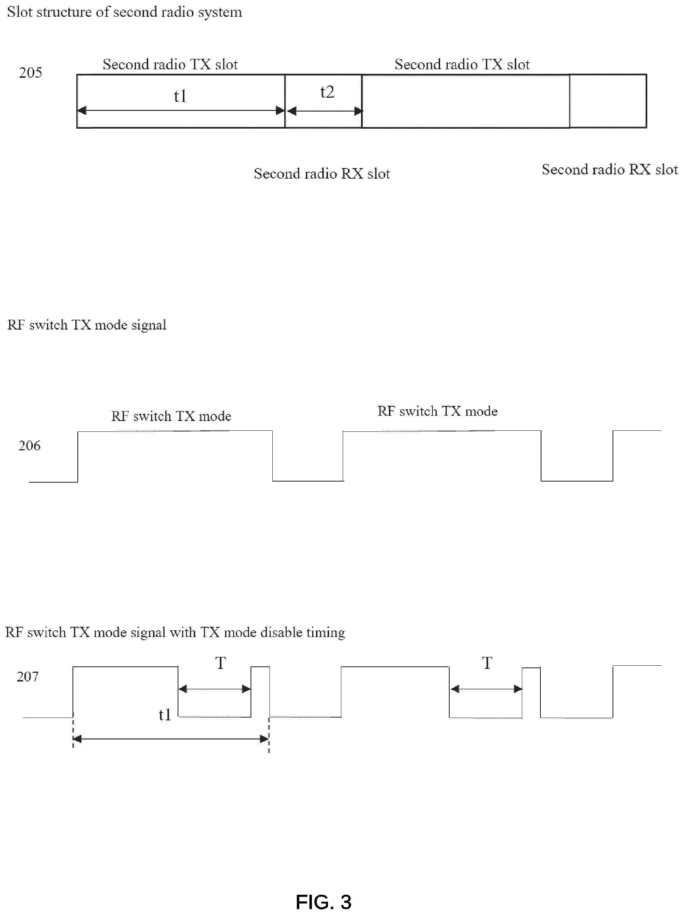

The fourth diagram shows the timing of an RF component, e.g., RF switch, transmit mode (e.g., first mode) disable signal 203, which is used to form a control signal, or signals, output by the controller 106 of the second transceiver 104 (e.g., via 113 and 114) to control the RF component 105 (see discussion of Fig. 3 below). In embodiments, the controller 106 may output a single signal, e.g., a differential signal, to control both the first mode timing and the second mode timing in the RF component 105, rather than separate control signals for these modes. In embodiments, the controller 106 may be configured to output the RF component transmit mode (e.g., first mode) disable signal 203, as part of a composite control signal or signals (e.g., 113, 114) to the RF component 105 with a timing to switch temporarily from the first mode of the RF component 105 to the second mode, e.g., to set the RF component to the receive mode, for a defined time period 204 (T) when the Wi-Fi state signal 202 (109) indicates the receive mode of the Wi-Fi transceiver.

The controller 106 may output the control signal or signals (e.g., 113, 114) with a timing to switch temporarily from the first mode (e.g., normal transmit mode) of the RF component 105 for a defined time period 204 (T) when the Wi-Fi state signal 202 (109) indicates the receive mode of the Wi-Fi transceiver 103, i.e., when the Wi-Fi transceiver 103 transitions from the transmit mode to the receive mode. In embodiments, the defined time period (7) is greater than a length of Clear to Send (CTS) signals and greater than a length of Acknowledge (ACK) signals received by the Wi-Fi transceiver 103.

Thus, the controller 106 of the second transceiver outputs the control signal for the RF component 105 with a timing to permit the Wi-Fi transceiver 103 and the second transceiver 104 to transmit at the same time but not permit the second transceiver 104 to transmit at full power when the Wi-Fi transceiver is waiting to receive, ACK or CTS signals. In embodiments in which the RF component 105 includes an RF switch, this may be done by switching a direction in which RF signals are allowed to pass through the switch. For example, RF signals may travel substantially in a first direction (away from the second transceiver 104) toward the antenna 102 in the first mode (e.g., normal transmit mode) and substantially in a second direction away from the antenna 102 (toward the second transceiver 104) in the second mode (e.g., receive mode). In embodiments in which the RF component 105 is an adjustable gain amplifier, this may be done by switching from a higher gain setting in the first mode (e.g., normal transmit mode), so that amplified RF signals can be output by the antenna at normal operational signal strength, to a lower gain setting in the second mode (e.g., low power transmit mode), so that little or no RF signal is output by the antenna. One of ordinary skill in the art would understand that in an RF switch, substantially all of an RF signal flows in a selected direction, while a portion of the RF signal may flow in a different direction (e.g., to a different output port) due to the practical operational specifications of the switch, e.g., the specified isolation between two output ports.

Figure 3 depicts timing diagrams of a frame structure of the second transceiver 204 and corresponding RF component 105 control signals. The second transceiver 204 is a frame-based wireless communication system, e.g., a TDMA-based system. The first diagram depicts the timing of a slot structure 205, i.e., frame structure, which includes a transmit slot and a receive slot with regular timing *t1* and *t2*, respectively.

In general, the RF component 105 is changed to the first mode (e.g., normal transmit mode) as the second transceiver 104 operates in transmit mode, and the RF component 105 is changed to second mode (e.g., receive mode or low power transmit mode) as the second transceiver 104 operates in receive mode. The controller 106 has a signal 113 for controlling a first mode timing in the RF component 105 (referred to as "RF switch" in the figure) and another signal 114 for controlling a second mode timing in the RF component 105.

The second diagram depicts the timing of the RF switch first mode (e.g., transmit mode) signal 206 (113), which corresponds to the timing of the slot structure 205 of the second transceiver 104, i.e., the RF switch first mode signal 206 goes high during the transmit slot (*t1*) and low during the receive slot (*t2*). In disclosed embodiments, the controller 106 may be configured to receive the mode signal 206 of the second transceiver 104 to determine the mode status, or timing of the transmit mode and the receive mode of the second transceiver 104, i.e., whether the second transceiver 104 is currently in the transmit mode or the receive mode.

In embodiments, the mode signal 206 of the second transceiver 104 may be generated by the controller 106 (and output to the second transceiver 104), in which case the mode signal is "received" by the controller 106 in the sense that it is available to a processor of the controller 106 to serve as a basis for further action. In embodiments, a combination of two or more of: the controller 106, the second transceiver 104, and the RF component 105, may integrally formed as a single component, device, or subsystem.

In embodiments, the controller 106 of the second transceiver 104 outputs the control signal or signals (e.g., 113, 114) with a timing to cause the RF component 105 to: (i) maintain the first mode (e.g., normal transmit mode) of the RF component 105 when the second transceiver mode signal (e.g., 206) indicates the transmit mode of the second transceiver 104 and the Wi-Fi state signal 202 (109) indicates the transmit mode of the Wi-Fi transceiver 103; and (ii) maintain the second mode (e.g., receive mode or low power transmit mode) of the RF component 105 when the second transceiver mode signal (e.g., 206) indicates a transition from the transmit mode to the receive mode of the second transceiver 104.

Referring again to Fig. 3, the third diagram depicts the timing of the RF component, e.g., RF switch, first mode (e.g., transmit mode) signal 206 with an overlaid RF switch transmit mode disable signal 203 (see Fig. 2), resulting in a composite RF switch first mode signal with transmit mode disable timing 207. Thus, the troughs of the RF switch first mode (e.g., transmit mode) disable signal 203 - in which the RF component 105 substantially reduces transmission by the second transceiver 104 - are, in effect, "inserted into" the RF switch first mode (e.g., transmit mode) signal 206.

As discussed above, the controller 106 of the second transceiver 104 is configured to receive a Wi-Fi state signal 202 (see Fig. 2) from the Wi-Fi transceiver 103. In embodiments, the control signal (e.g., 113 and 114) for the RF component 105 is output with a timing based on the Wi-Fi state signal (202) 109 and the mode signal 206 of the second transceiver 104. Thus, the RF switch first mode (e.g., transmit mode) disable signal 203 forms part of a composite control signal or signals (e.g., 113, 114) to the RF component 105 with a timing to disable the transmit mode of the RF component 105, e.g., to set the RF switch to the receive mode (or, in embodiments including an adjustable gain amplifier, to set the amplifier to the low power transmit mode), for a defined time period 204 (T) when the Wi-Fi state signal 202 (109) indicates the receive mode of the Wi-Fi transceiver 103, i.e., a transition from the transmit mode to the receive mode.

In embodiments, the controller 106 of the second transceiver 104 is configured to output the control signal or signals (e.g., 113, 114) for the RF component 105 to cause switching from the first mode to the second mode of the RF component 105 in a time period shorter than the Short Inter-frame Space (SIFS) of the Wi-Fi transceiver 103. In such a case, the controller 106 inserts the RF switch transmit mode disable signal 203 into the RF switch first mode (e.g., transmit mode) signal 206, as explained above, based on a determined interval 204 (T) for, in effect, disabling the transmit mode of RF component 105. The shortest duration of SIFS depends on the physical layer used in the Wi-Fi transceiver. The RF component 105 switches from the first mode (e.g., the transmit mode) to the second mode within the SIFS timeframe. The controller 106 outputs the control signal or signals (e.g., 113, 114) with a timing to switch temporarily from the first mode of the RF component 105 to the second mode for a defined time interval 204 (T). The Wi-Fi transceiver 103 is able to receive CTS or ACK signals in this transmit mode disable period without interference from the second transceiver 104, thereby preventing RTS retries caused by the Wi-Fi transceiver 103 not receiving the CTS signal and data packed retries caused by the Wi-Fi transceiver 103 not receiving the ACK signal. After the interval 204 (T), the controller 106 controls the transmit mode of the RF component 105 to follow the current mode of second transceiver 104.

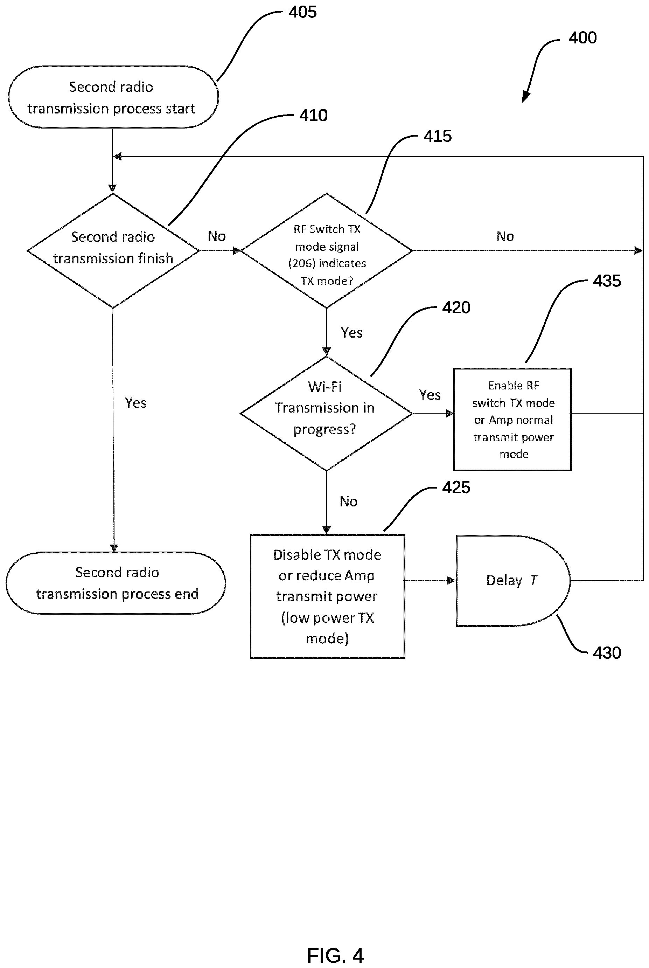

Figure 4 depicts a flowchart of the control loop 400 for switching of the RF component 105 (referred to as "RF switch" in the figure) based on the Wi-Fi state signal 109 and the current mode (i.e., transmit or receive) of the second transceiver 104 to reduce interference in the Wi-Fi transceiver 103. In accordance with the operations depicted in the figure, the second radio module controller 106 starts a transmission process (405) of the second radio system, i.e., second transceiver 104, and continually checks (410) as the second transceiver 104 transmits data. There is a check to determine whether the RF component 105 remains in the first mode, (e.g., the transmit mode) (415), i.e., whether the RF switch transmit mode signal 206 remains high, thereby indicating the transmit mode. The second radio module controller 106 monitors the Wi-Fi transceiver 103 transmission to determine whether it is in transmit mode (420). The RF component 105 transmit mode will be changed to the (second mode) receive mode (425) as the Wi-Fi transceiver 103 finishes its transmission, i.e., as it finishes operation in the transmit mode, followed by a delay (430) for a defined time period (T), thereby preventing interference from the second transceiver 104 with the receiving mode of the Wi-Fi transceiver 103 during its receive time slot (t2). If the Wi-Fi transceiver 103 is still transmitting, then the (first) transmit mode of the RF component 105 is activated/maintained (435).

Thus, in disclosed embodiments, the second radio module controller 106 checks the state of the Wi-Fi transceiver 103 (i.e., transmit mode or receive mode) to determine the desired state of RF component 105. The second radio module controller 106 changes the RF component 105 from the first mode (e.g., the transmit mode) to the second mode (e.g., the receive mode) if it detects that the Wi-Fi transceiver 103 has changed from the transmit mode to receive mode. In embodiments in which an adjustable gain amplifier is used as the RF component 105, the transmit power of second transceiver 104 is substantially decreased when the RF component 105 transitions from the first mode (e.g., the normal transmit mode) to the second mode (e.g., the low power transmit mode), thereby minimizing the signal transmitted by the second transceiver 104. The decreased transmit power of second transceiver - either by switching an RF switch from transmit to receive or by decreasing/minimizing the gain of an amplifier - reduces the interference to the Wi-Fi transceiver 103 as the Wi-Fi receiver 103 attempts to receive CTS or ACK signals. This, in turn, allows the Wi-Fi transceiver 103 to achieve a substantially lower retransmission rate than in conventional approaches.

By virtue of the features described above, it is possible to maximize the probability of receiving Wi-Fi ACK (Acknowledge) signals and CTS (Clear to Send) signals without interference from second radio transceiver 104.

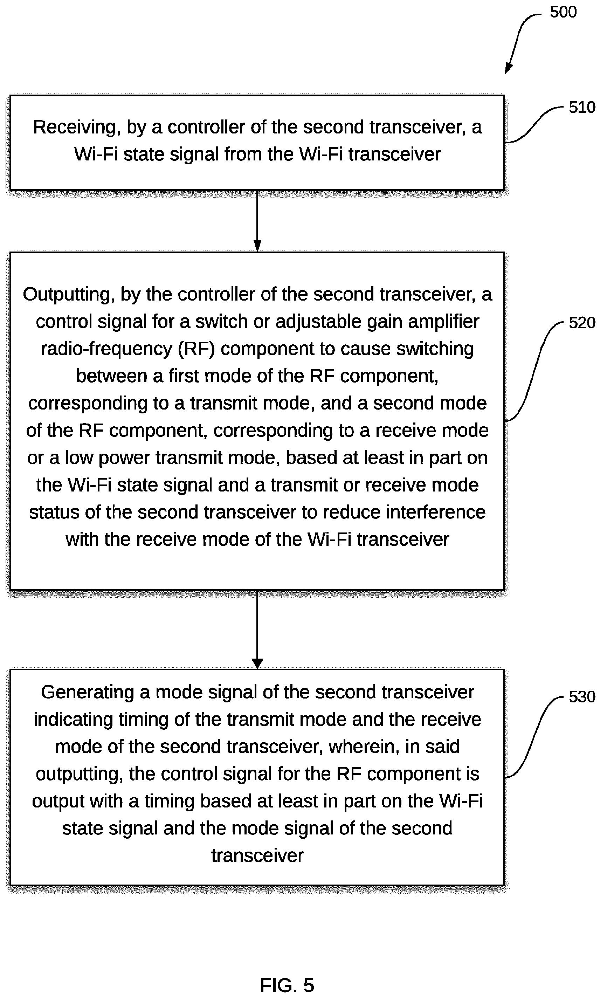

Figure 5 depicts a flowchart of a method 500 to reduce interference between communications performed by a Wi-Fi transceiver 103 and coexisting wireless communications performed by a second transceiver 104 in a dual wireless communication system. The method includes receiving (510), by a controller 106 of the second transceiver 104, a Wi-Fi state signal from the Wi-Fi transceiver 103. The Wi-Fi state signal indicates timing of a transmit mode and a receive mode of the Wi-Fi transceiver 103. The method further includes outputting (520), by the controller 106 of the second transceiver 104, a control signal for a radio-frequency (RF) component 105 to cause switching between a first mode of the RF component, corresponding to a transmit mode, and a second mode of the RF component 105, corresponding to a receive mode or a low power transmit mode, based at least in part on the Wi-Fi state signal and a current transmit or receive mode of the second transceiver 104 to reduce interference with the receive mode of the Wi-Fi transceiver 103.

In particular embodiments, the method further includes generating (530) a mode signal of the second transceiver indicating timing of the transmit mode and the receive mode of the second transceiver. In such a case, in said outputting (520), the control signal for the RF component is output with a timing based at least in part on the Wi-Fi state signal and the mode signal of the second transceiver.

Thus, from one perspective, there have been described techniques for reducing interference between communications performed by a Wi-Fi transceiver and coexisting wireless communications performed by a second transceiver in a dual wireless communication system. A method includes receiving, by a controller of the second transceiver, a Wi-Fi state signal from the Wi-Fi transceiver. The Wi-Fi state signal indicates timing of a transmit mode and a receive mode of the Wi-Fi transceiver. The method further includes outputting, by the controller of the second transceiver, a control signal for a radio-frequency (RF) component to cause switching between a first mode of the RF component, corresponding to a normal transmit mode, and a second mode of the RF component, corresponding to a receive mode or a low power mode, based at least in part on the Wi-Fi state signal, and a transmit or receive mode status of the second transceiver to reduce interference with the receive mode of the Wi-Fi transceiver.

The claimed software elements can be realized on a variety of systems or subsystems. The following description, in conjunction with the disclosed embodiments described in the foregoing, provides representative, non-limiting examples of potential telecommunications systems or subsystems that could be used to execute the claimed software elements.

At a high level, a system or subsystem typically includes, but is not limited to, communication devices, networks, servers, and a variety of other hardware and software components. In general, communication devices may include a broad range of devices such as audio/video monitoring and security devices, cordless telephones, mobile phones, smartphones, computers, tablets, and other types of devices capable of sending and receiving communication signals. These devices usually include at least one processor, memory, a user interface (such as a display, keyboard, or touch screen), and a network interface for connecting to a network.

Software elements in a system may include operating systems, device drivers, networking software, applications, and other types of software. These software elements can be executed on communication devices, base stations, servers, or other hardware components of the systems or subsystems. The claimed software elements may be embodied as computer program code that is executed on one or more of the hardware components of the system or subsystem. This code could be stored on a non-transitory computer-readable medium that is part of the communication device, base station, server, or other component, or it could be stored on an external storage device, network storage, or cloud storage. Additionally, or alternatively, a computer-readable medium can include transient media such as carrier waves and transmission media.

It should be noted that the described systems and subsystems are illustrative and that the claimed software elements can be executed on any suitable system or subsystem. The specific configuration of the system or subsystem may vary depending on the requirements of the application, performance characteristics of the system, cost considerations, and other factors. The scope of the disclosure is not limited to the specific systems and subsystems described herein but includes any and all systems or subsystems suitable for implementing the present disclosure.

The foregoing detailed description has presented various implementations of the devices and/or processes through the use of block diagrams, schematics, and illustrative examples. As such block diagrams, schematics, and examples include one or more functions and/or operations, it should be understood by those skilled in the art that each function and/or operation within these block diagrams, flowcharts, or examples can be implemented individually and/or collectively by employing a wide range of hardware, software, firmware, or any combination thereof. It should also be recognized by those skilled in the art that the methods or algorithms described herein may incorporate additional steps, may exclude some steps, and/or may execute steps in an order different from the one specified. The various implementations described above can be combined to create additional implementations.

These modifications and other changes can be made to the implementations in light of the above-detailed description. Generally, the terms used in the following claims should not be construed to limit the claims to the specific implementations disclosed in the specification and the claims. Instead, they should be interpreted to encompass all possible implementations, along with the full scope of equivalents to which such claims are entitled. Consequently, the claims are not limited by the disclosure but are intended to cover all possible implementations within their scope.

Further examples of feature combinations taught by the present disclosure are set out in the following numbered clauses:
1. A method to reduce interference between communications performed by a Wi-Fi transceiver and coexisting wireless communications performed by a second transceiver in a dual wireless communication system, the method comprising:
   receiving, by a controller of the second transceiver, a Wi-Fi state signal from the Wi-Fi transceiver, the Wi-Fi state signal indicating timing of a transmit mode and a receive mode of the Wi-Fi transceiver; and
   outputting, by the controller of the second transceiver, a control signal for a switch or adjustable gain amplifier radio-frequency (RF) component to cause switching between a first mode of the RF component, corresponding to a transmit mode, and a second mode of the RF component, corresponding to a receive mode or a low power transmit mode, based at least in part on the Wi-Fi state signal and a transmit or receive mode status of the second transceiver to reduce interference with the receive mode of the Wi-Fi transceiver.
2. The method of clause 1, wherein the RF component comprises an RF switch configured to pass RF signals substantially in an output direction in the first mode and substantially in an input direction in the second mode.
3. The method according to any of clauses 1 or 2, wherein the RF component comprises an adjustable gain amplifier configured to pass RF signals in an output direction with a substantially higher gain in the first mode and with a substantially lower gain in the second mode.
4. The method according to any of clauses 1 to 3, further comprising generating a second transceiver mode signal to control timing of the transmit mode and the receive mode of the second transceiver, wherein, in said outputting, the control signal for the RF component is output with a timing based at least in part on the Wi-Fi state signal and the second transceiver mode signal.
5. The method of clause 4, wherein, in said outputting, the controller of the second transceiver outputs the control signal with a timing to cause the RF component to:
   maintain the first mode of the RF component when the second transceiver mode signal indicates the transmit mode of the second transceiver and the Wi-Fi state signal indicates the transmit mode of the Wi-Fi transceiver, and
   maintain the second mode of the RF component when the second transceiver mode signal indicates the receive mode of the second transceiver.
6. The method of clause 5, wherein the controller of the second transceiver outputs the control signal for the RF component with a timing to switch temporarily from the first mode of the RF component to the second mode for a defined time period when the Wi-Fi state signal indicates a transition from the transmit mode to the receive mode of the Wi-Fi transceiver.
7. The method of clause 6, wherein the defined time period is greater than a length of Clear to Send (CTS) signals and greater than a length of Acknowledge (ACK) signals received by the Wi-Fi transceiver.
8. The method according to any of clauses 1 to 7, wherein the Wi-Fi transceiver and the second transceiver have operational frequencies that at least partially overlap.
9. The method according to any of clauses 1 to 8, wherein, in said outputting, the controller of the second transceiver outputs the control signal for the RF component with a timing to permit the Wi-Fi transceiver and the second transceiver to transmit at the same time but not permit the second transceiver to transmit at full power when the Wi-Fi transceiver is waiting to receive, ACK or CTS signals.
10. The method according to any of clauses 1 to 9, wherein, in said outputting, the control signal for the RF component is output with a timing to cause switching from the first mode to the second mode of the RF component in a time period shorter than the Short Inter-frame Space (SIFS) of the Wi-Fi transceiver.
11. A dual wireless communication system configured to reduce interference between communications performed by a Wi-Fi transceiver and coexisting wireless communications performed by a second transceiver, the system comprising:
   a Wi-Fi transceiver;
   a second transceiver having a controller, wherein the controller of the second transceiver is configured to:
      receive a Wi-Fi state signal from the Wi-Fi transceiver, the Wi-Fi state signal indicating timing of a transmit mode and a receive mode of the Wi-Fi transceiver; and
      output a control signal for a switch or adjustable gain amplifier radio-frequency (RF) component to cause switching between a first mode of the RF component, corresponding to a normal transmit mode, and a second mode of the RF component, corresponding to a receive mode or a low power transmit mode, based at least in part on the Wi-Fi state signal and a transmit or receive mode status of the second transceiver, to reduce interference with the receive mode of the Wi-Fi transceiver.
12. The system of clause 11, wherein the second transceiver is connected to an antenna via the RF component.
13. The system according to any of clauses 11 or 12, wherein the second transceiver is a Time Division Multiple Access (TDMA) transceiver.
14. The system according to any of clauses 11 to 13, wherein the Wi-Fi transceiver and the second transceiver have operational frequencies that at least partially overlap.
15. The system according to any of clauses 11 to 14, wherein the RF component comprises an RF switch configured to pass RF signals substantially in an output direction in the first mode and substantially in an input direction in the second mode.
16. The system according to any of clauses 11 to 15, wherein the RF component comprises an adjustable gain amplifier configured to pass RF signals in an output direction with a substantially higher gain in the first mode and with a substantially lower gain in the second mode.
17. The system according to any of clauses 11 to 16, wherein the controller of the second transceiver is further configured to generate a second transceiver mode signal to control timing of the transmit mode and the receive mode of the second transceiver, and wherein the control signal for the RF component is output with a timing based at least in part on the Wi-Fi state signal and the second transceiver mode signal.
18. The system of clause 17, wherein the controller of the second transceiver is further configured to output the control signal with a timing to cause the RF component to:
   maintain the first mode of the RF component when the second transceiver mode signal indicates the transmit mode of the second transceiver and the Wi-Fi state signal indicates the transmit mode of the Wi-Fi transceiver, and
   maintain the second mode of the RF component when the second transceiver mode signal indicates the receive mode of the second transceiver.
19. The system of clause 18, wherein the controller of the second transceiver is further configured to output the control signal for the RF component with a timing to switch temporarily from the first mode of the RF component to the second mode for a defined time period when the Wi-Fi state signal indicates a transition from the transmit mode to the receive mode of the Wi-Fi transceiver.
20. The system of clause 19, wherein the defined time period is greater than a length of Clear to Send (CTS) signals and greater than a length of Acknowledge (ACK) signals received by the Wi-Fi transceiver.
21. The system according to any of clauses 11 to 20, wherein the controller of the second transceiver is further configured to output the control signal for the RF component with a timing to permit the Wi-Fi transceiver and the second transceiver to transmit at the same time but not permit the second transceiver to transmit at full power when the Wi-Fi transceiver is waiting to receive, ACK or CTS signals.
22. The system according to any of clauses 11 to 21, wherein the controller of the second transceiver is further configured to output the control signal for the RF component with a timing to cause switching from the first mode to the second mode of the RF component in a time period shorter than the Short Inter-frame Space (SIFS) of the Wi-Fi transceiver.
23. One or more computer-readable media, having encoded thereon instructions which, when executed by at least one processor, cause said at least one processor to carry out the method according to any of clauses 1 to 10, as performed by the controller of the second transceiver.

## Claims

1. A method to reduce interference between communications performed by a Wi-Fi transceiver and coexisting wireless communications performed by a second transceiver in a dual wireless communication system, the method comprising:
receiving, by a controller of the second transceiver, a Wi-Fi state signal from the Wi-Fi transceiver, the Wi-Fi state signal indicating timing of a transmit mode and a receive mode of the Wi-Fi transceiver; and
outputting, by the controller of the second transceiver, a control signal for a switch or adjustable gain amplifier radio-frequency (RF) component to cause switching between a first mode of the RF component, corresponding to a transmit mode, and a second mode of the RF component, corresponding to a receive mode or a low power transmit mode, based at least in part on the Wi-Fi state signal and a transmit or receive mode status of the second transceiver to reduce interference with the receive mode of the Wi-Fi transceiver.

2. The method of claim 1, wherein the RF component comprises an RF switch configured to pass RF signals substantially in an output direction in the first mode and substantially in an input direction in the second mode.

3. The method according to any of claims 1 or 2, wherein the RF component comprises an adjustable gain amplifier configured to pass RF signals in an output direction with a substantially higher gain in the first mode and with a substantially lower gain in the second mode.

4. The method according to any of claims 1 to 3, further comprising generating a second transceiver mode signal to control timing of the transmit mode and the receive mode of the second transceiver, wherein, in said outputting, the control signal for the RF component is output with a timing based at least in part on the Wi-Fi state signal and the second transceiver mode signal.

5. The method of claim 4, wherein, in said outputting, the controller of the second transceiver outputs the control signal with a timing to cause the RF component to:
maintain the first mode of the RF component when the second transceiver mode signal indicates the transmit mode of the second transceiver and the Wi-Fi state signal indicates the transmit mode of the Wi-Fi transceiver, and
maintain the second mode of the RF component when the second transceiver mode signal indicates the receive mode of the second transceiver.

6. The method of claim 5, wherein the controller of the second transceiver outputs the control signal for the RF component with a timing to switch temporarily from the first mode of the RF component to the second mode for a defined time period when the Wi-Fi state signal indicates a transition from the transmit mode to the receive mode of the Wi-Fi transceiver, for example, wherein the defined time period is greater than a length of Clear to Send (CTS) signals and greater than a length of Acknowledge (ACK) signals received by the Wi-Fi transceiver.

7. The method according to any of claims 1 to 6, wherein the Wi-Fi transceiver and the second transceiver have operational frequencies that at least partially overlap.

8. The method according to any of claims 1 to 7, wherein, in said outputting, the controller of the second transceiver outputs the control signal for the RF component with a timing to permit the Wi-Fi transceiver and the second transceiver to transmit at the same time but not permit the second transceiver to transmit at full power when the Wi-Fi transceiver is waiting to receive, ACK or CTS signals.

9. The method according to any of claims 1 to 8, wherein, in said outputting, the control signal for the RF component is output with a timing to cause switching from the first mode to the second mode of the RF component in a time period shorter than the Short Inter-frame Space (SIFS) of the Wi-Fi transceiver.

10. A dual wireless communication system configured to reduce interference between communications performed by a Wi-Fi transceiver and coexisting wireless communications performed by a second transceiver, the system comprising:
a Wi-Fi transceiver;
a second transceiver having a controller, wherein the controller of the second transceiver is configured to:
receive a Wi-Fi state signal from the Wi-Fi transceiver, the Wi-Fi state signal indicating timing of a transmit mode and a receive mode of the Wi-Fi transceiver; and
output a control signal for a switch or adjustable gain amplifier radio-frequency (RF) component to cause switching between a first mode of the RF component, corresponding to a normal transmit mode, and a second mode of the RF component, corresponding to a receive mode or a low power transmit mode, based at least in part on the Wi-Fi state signal and a transmit or receive mode status of the second transceiver, to reduce interference with the receive mode of the Wi-Fi transceiver.

11. The system of claim 10, wherein the second transceiver is connected to an antenna via the RF component.

12. The system according to any of claims 10 or 11, wherein the second transceiver is a Time Division Multiple Access (TDMA) transceiver.

13. The system according to any of claims 10 to 12, wherein the RF component comprises an RF switch configured to pass RF signals substantially in an output direction in the first mode and substantially in an input direction in the second mode.

14. The system according to any of claims 10 to 14, wherein the RF component comprises an adjustable gain amplifier configured to pass RF signals in an output direction with a substantially higher gain in the first mode and with a substantially lower gain in the second mode.

15. One or more computer-readable media, having encoded thereon instructions which, when executed by at least one processor, cause said at least one processor to carry out the method according to any of claims 1 to 9, as performed by the controller of the second transceiver.
